# NEUE EUROPÄISCHE PATENTSCHRIFT

(11) **EP 0 711 019 B2**
(45) Veröffentlichungstag und Bekanntmachung des Hinweises auf die Entscheidung über den Einspruch: **26.03.2003**
(45) Hinweis auf die Patenterteilung: 31.03.1999
(21) Anmeldenummer: 95114761.0
(22) Anmeldetag: 19.09.1995
(51) Int. Cl.: H02K 5/128, H02K 3/47, F04D 15/02, F04D 15/00, H02K 11/04

(54) **Spaltrohrpumpe**
Canned pump
Pompe à tube d'entrefer

(30) Priorität: 27.10.1994 DE 4438132
(43) Veröffentlichungstag der Anmeldung: 08.05.1996
(60) Teilanmeldung: 98111587.6
(73) Patentinhaber: WILO GmbH, D-44263 Dortmund (DE)
(72) Erfinder: Hanitsch, Rolf, Prof. Dr., D-14197 Berlin (DE); Kech, Hansjürgen, Dipl.-Ing., D-58313 Herdecke (DE)
(74) Vertreter: COHAUSZ DAWIDOWICZ HANNIG & PARTNER

(56) Entgegenhaltungen:
- EP-A- 0 225 132
- EP-A- 0 374 805
- EP-B- 0 374 612
- WO-A-93/06649
- DE-A- 1 638 272
- DE-A- 3 526 166
- DE-B- 1 096 476
- DE-U- 9 200 510
- FR-A- 1 296 666
- GB-A- 1 414 949
- US-A- 4 404 483
- US-A- 4 679 313
- US-A- 4 883 981
- PATENT ABSTRACTS OF JAPAN vol. 008 no. 074 (E-236) ,6.April 1984 & JP-A-58 222745 (SHIBAURA SEISAKUSHO:KK) 24.Dezember 1983,
- PATENT ABSTRACTS OF JAPAN vol. 008 no. 029 (E-226) ,7.Februar 1984 & JP-A-58 190266 (SHIBAURA SEISAKUSHO:KK) 7.November 1983,
- Preprint von der Pumpentagung in Karlsruhe vom 06-08.10.92 von Dipl. Ing. G. Hunnekuhl, Titel: "Wirkungsgrade bei Heizungsumwaelzpumpen kleiner Leistungen und Moeglichkeiten der Verbesserung"

## Beschreibung

Die Erfindung betrifft eine Spaltrohrpumpe mit einem die Pumpe antreibenden Motor, bei dem zwischen Rotor und dem Ständer ein Spaltrohr insbesondere ein Spalttopf angeordnet ist, wobei das Spaltrohr die Ständerwicklung trägt.

Spaltrohrpumpen werden fast ausschließlich mit Asynchronmaschinen in Drehstrom oder Wechselstrom betrieben, da Asynchronmaschinen eine hohe Fertigungsreife erreicht haben und sich durch ihre kompakte Bauweise und ihre Zuverlässigkeit ausweisen. Im kleinen und mittleren Leistungsbereich ist der Wirkungsgrad von Asynchronmaschinen jedoch ungenügend. Ebenso nachteilig ist der bei kleinen Asynchronmaschinen unverhältnismäßig große Aufwand an Elektronik für die stufenlose Regelung des Motors. Spaltrohrmotoren haben jedoch den Vorteil, daß die elektrische Antriebsseite hermetisch mittels des Spaltrohres bzw. Spalttopfes von den rotierenden Teilen sowie dem Fördermedium getrennt ist.

Aus der DE 16 38 272 ist eine Pumpe mit Spaltrohrmotor bekannt, dessen als Pumpenrotor ausgebildeter von der Förderflüssigkeit umspülter Rotor im Spaltrohr und dessen Motorwicklung auf er Außenseite des Spaltrohres angeordnet ist. Der Spaltrohrmotor ist ein kollektorloser Gleichstrommotor, dessen Permanentmagnete unmittelbar auf dem Pumpenrotor befestigt sind und dessen das Antriebs feld steuernde Halbleiterelemente auf der Außenseite des Spaltrohres angeordnet sind. Die Ständerwicklung bei diesem Spaltrohrmotor besteht aus einzelnen Windungen, die bei der Montage nacheinander einzeln auf den Spalttopf aufgelegt werden oder einzeln in die Nuten des Ständerblechpakets eingelegt werden. Nachteilig ist hierbei, daß der Fertigungsaufwand zum Wickeln der Ständerwicklungen relativ hoch ist und beim Aufwickeln der Ständerwicklung vom Fertigungspersonal Fehler begangen werden können.

Aus der US 4 883 981 ist ein Dynamo bekannt, bei dem ein zylindrisches ferromagnetisches Rohr an seiner Innenfläche die Statorwicklung trägt und der Rotor äquidistant um die Rotorachse verteilt angeordnete Permanentmagnete hat. In einer besonderen Ausführungsform des Dynamos besteht die Statorwicklung aus einer auf einem biegsamen Trägermaterial geätzten Kupferwicklung.

Aus der DE 35 26 166 Al ist eine gedruckte Spuleneinheit für ein Betätigungsglied geringer Abmessungen bekannt. Die Spuleneinheit enthält ein einzelnes gedrucktes Spulenblatt oder eine Schichtung von solchen Spulenblättern. Jedes Blatt besitzt dabei in ein und derselben Ebene mehr als ein Spiral-Spulenmuster. Zusätzlich sind magnetische Sensorelemente, z.B. ein Hall-Element oder ein magnetisches Widerstandselement in Freizonen zwischen zwei benachbarten Spiral-Spulenmustern auf dem Spulenblatt gebildet. Auch kann auf einem Spulenblatt eine Bewegungsgeschwindigkeits-Fühispule vorgesehen sein.

Aus der WO-A-93 06649 ist ebenfalls eine elektrische Maschine bekannt, bei der die Statorwicklungen von einem Wicklungsträger getragen werden und bei der der Rotor Permanentmagnete hat, welche mit dem Drehfeld des Stator zusammenwirken.

Aus der EP-B-0 374 612 ist ein Spaltrohr-Elektromotor, insbesondere für eine Pumpe, mit einem Statorblechpaket, das den Spalttopf umgibt und von Wicklungen durchdrungen ist, bekannt. Die wicklungen sind dabei an einer gewölbten Flüche des Bodens des Spalttopfes außen angebachen bzw. angehlest.

Aus der EP-A-0 225 132 ist ein Stator mit Luftspaltwicklung für eine elektrische Maschine bekannt. Der Stator umfaßt dabei einen zylindrischen Wicklungsträges mit einer Vielzahl von longitudinal angeordneten vorsprüngen auf, wobei die Vorsprünge von dem zylindrischen Wicklungsträges radial nach außen weisen. Zwischen den vorsprüngen sind die Wicklungen des Stators ausgebildet.

Aus der US-A-4 679 313 ist ein Verfahren Herstellung eines Elektromotors bekannt, wobei des Elektromotor eine Statorwicklung innerhals einer ungenutaten, zylindrischen statorhälle aufweist. Die statorwicklung liegt dabei auf einem zylindrischen wicklungsträges auf.

Aus der DE-U-92 00 510 ist eine Naßlänfepumpe, insbesondere von einem Einphasen-Synchronmotor angetriebene Geschirrspüler- Pumpe, mit in einem Spaltrohr über zumindest ein Gleitlages gelagerte Rotorwelle bekannt.

Zu dem war die Verwendung von elektromisch kommtierten Motoren in zusammentung mit Spaltrohrpumpen angedacht.

Aufgabe der Erfindung ist es, einen Spaltrohrmotor dahingehend weiter zu entwickeln, daß der Fertigungsaufwand verringert und die Funktionssicherheit erhöht wird.

Gelöst wind diese Aufgabe durch eine Spaltrohrpumpe mit den Merkmalen des Anspruchs 1. Durch die vorteilhafte Verwendung einer ein- oder mehrlagigen Folie mit integrierten elektrischen leitenden Wicklungen verringert sich der Fertigungsaufwand erheblich, da lediglich die vorgefertigte Folie um den Spalttopf bzw. das Spaltrohr gelegt werden muß. Durch den Einsatz verschiedener vorgefertigter Folien oder Leiterplatinen kann der Spaltrohrmotor für unterschiedlichste Aufgaben in seiner Leistung dimensioniert werden.

Mittels einer Backlackwicklung läßt sich eine sehr enge Bewicklung des Spalttopfes erzielen, wobei insbesondere durch das Verbacken bzw. Einschmelzen der Backlackwicklung mit dem Spalttopf eine besonders stabile Konstruktion erzielt wird. Die Wicklungen können hierdurch durch die auftretenden Feldkräfte nicht gegeneinander verschoben werden. Dadurch erniedrigen sich die bei herkömmlichen Wicklungen auftretenden Wicklungsgeräusche. Die oben aufgeführten Ausführungsformen zeichnen sich vorteilhaft dadurch aus, daß der Luftspalt zwischen Ständer und Rotor vorteilhaft nur von der Dicke des Spaltrohres bzw. Spalttopfes abhängt. Das Spaltrohr bzw. der Spalttopf hat somit vorteilhaft eine doppelte Funktion. Einerseits übernimmt es die Aufgabe als Wicklungsträger mit guter Wärmeabfuhr und andererseits dient es zur Trennung der elektrischen Antriebsseite von dem Rotor.

Die für die Ständerwicklung eingesetzte einoder mehrlagige Folie kann vorteilhaft mittels eines Ätzverfahrens hergestellt werden. Hierbei werden die Windungen in einem Arbeitsschritt hergestellt, wodurch sich Fehler bei der Herstellung der Wicklungen auf ein Minimum reduzieren. Auch sind derartige Folien relativ kostengünstig herzustellen. Sie zeichnen sich besonders durch ihre flachen Abmessungen und ihre hohe Lebensdauer aus.

Die Ständerwicklung liegt dabei an der zylindrischen Außenseite des Spaltrohres bzw. Spalttopfes an. Ein derartiger Motor wird üblicherweise als Radialflußmotor bezeichnet.

Beim Radialflußmotor sind an der dem Spaltrohr zugewandten Seite des Rotors oder des Förderrades gleichmäßig um die Rotorachse angeordnet Permanentmagnete befestigt. Die Permanentmagnete dienen dabei gleichzeitig zur Erzeugung des Antriebsdrehmoments sowie zur Übertragung von Sendesignalen. Auch ist es vorteilhaft, wenn die Permanentmagnete segmentförmig sind, wobei die Permanentmagnete an einem Trägerelement befestigt oder eingeformt sind, wobei das Trägerelement form- oder kraftschlüssig vom Rotor gehalten ist. Das Trägerelement ist dabei vorzugsmäßig ein auf den Rotor aufgeschobenes hülsenförmiges Kunststoffteil, welches mit seiner äußeren Mantelfläche form- oder kraftschlüssig ein Blechpaket hält, wobei die Permanentmagnete in oder an der dem Kunststoffteil abgewandten Seite des Blechpaketes einliegen bzw. befestigt sind. Beim Radialflußmotor sind die Permanentmagnete am Rotor befestigt, so daß sich ihre Längsausdehnung vorzugsmäßig parallel zur Rotorachse erstreckt.

Der Radialflußmotor ist ein elektronisch kommutierter Motor. Vorteilhaft sind die Permanentmagnete flach ausgebildet, damit ein geringes Gewicht, niedrigere Fertigungskosten sowie eine kompaktere bzw. kleinere Bauweise der Pumpe erzielt wird.

Eine Elektronik nimmt die Kommutierung der Ständerwicklung zur Erzeugung des sich drehenden Ständermagnetfeldes vor wobei die einzelnen Wicklungen der Ständerwicklung mit der Elektronik in elektrischer Verbindung sind.

Sind die Permanentmagnete am Rotor angeordnet, so ist es vorteilhaft, daß die Ständerwicklung an der zylindrischen Außenseite des Spaltrohres oder Spalttopfes anliegt. Ein derart elektronisch kommutierter Motor wird auch als Radialflußmotor bezeichnet.

Auch ist es vorteilhaft, wenn die Folie mindestens eine zusätzliche Sensorwicklung hat oder daß die Ständerwicklung eine zusätzliche Folie mit mindestens einer Sensorwicklung hat oder daß in der Ständerfolienwicklung Sensoren einliegen oder daß mindestens eine Folie mindestens einen induktiven, kapazitiven oder ohmischen Sensor hat. Durch die platzsparende Integration derartiger Sensoren, die bei der Rotorpositionserfassung derartiger bürstenloser elektronisch kommutierter Motoren notwendig sind, wird eine Kosten- und Gewichtsersparnis erzielt.

Auch ist es vorteilhaft, wenn das Spaltrohr oder der Spalttopf aus einem weichmagnetischen Werkstoff oder Kunststoff ist. Hierdurch wird eine effektive Luftspaltverringerung erzielt, wodurch der Wirkungsgrad des Motors ebenfalls verbessert wird.

Wird die Spaltrohrpumpe zum Fördern eines Fördermediums eingesetzt, bei dem die Druck- bzw. Temperaturbeanspruchung eine Verringerung der Spaltrohr- bzw. Spalttopfdicke zuläßt, ist es vorteilhaft die Ständerwicklung und/oder Sensorwicklung in die vom Rotor oder vom Laufrad abgewandten Seite des Spaltrohres oder Spalttopfes einzulegen, einzugießen oder einzuschließen. Hierdurch lassen sich zusätzliche Fertigungskosteneinsparungen erzielen. Auch trägt das Eingießen der Ständerfolienwicklungen in die Außenwand des vorteilhaft aus Kunststoff gefertigten Spaltrohres oder Spalttopfes zur Gesamtstabilität des Spaltrohres bzw. Spalttopfes bei.

An der dem Spaltrohr oder dem Spalttopf abgewandten Seite der Ständerwicklung ist vorteilhaft ein Ständerblechpaket, wobei das Ständerblechpaket insbesondere zylinder- oder topfförmig ist. Das Ständerblechpaket ist dabei mit seiner Innenfläche und/oder Bodeninnenseite mit dem Spaltrohr in Kontakt, wodurch ein guter Wärmeübergang zwischen Ständerblechpaket oder Spaltrohr bzw. Spalttopf gegeben ist. Das Ständerblechpaket trägt ebenfalls vorteilhaft zur Stabilität der Statorkonstruktion bei.

Das Ständerblechpaket liegt mit seiner zylindrischen Innenseite beim Radialflußmotor Ständerwicklungen an. Das Ständerblechpaket ist vorzugsmäßig aus einem beschichteten weichmagnetischen oder SinterMaterial. Auch kann das Ständerblechpaket ein Ringbandkern sein, wobei eine metallische Ronde als magnetischer Rückschluß dient.

Auch ist es von Vorteil, wenn die Motorelektronik neben dem Stator angeordnet ist bzw. an diesen anschließt, insbesondere an der dem Pumpenlaufrad abgewandten Seite des Stators, wobei das Statorblechpaket als Kühlkörper und gleichzeitig zur elektrischen Abschirmung für die Elektronik dient. Durch das direkte Anliegen der Elektronik am Statorblechpaket bzw. am Spaltrohr bzw. Spalttopf insbesondere an dessen Boden wird die von der Elektronik erzeugte Wärme direkt an das Fördermedium übertragen. Zusätzliche Kühlkörper für die Elektronik sind nicht mehr notwendig, wodurch sich die Abmessungen des Motors sowie dessen Fertigungskosten reduzieren lassen. Die Motorelektronik ist dabei vorzugsweise als aufsteckbares Modul ausgebildet, so daß je nach späterem Einsatzgebiet und Leistungsauslegung des Motors ein entsprechendes Elektronikmodul gewählt werden kann. An dem Motorgehäuse und/oder der Motorelektronik sind Steckkontakte (Stecker oder Buchse), die vorzugsweise in axialer Richtung angeordnet sind. Am Spalttopf und/oder dem Statorblechpaket und/oder der Ständerwicklung sind gleichfalls Kontakte (Stecker oder Buchse) angeordnet. Beim axialen Zusammenfügen der Teile werden gleichzeitig die Steckverbindungen geschlossen. Die Motorelektronik bzw. das Elektronikmodul kann zudem einen Teil des Motorgehäuses bilden. Durch diese Integration läßt sich der Montageaufwand weiter reduzieren.

Es ist ebenfalls von Vorteil, wenn an der dem Pumpenlaufrad abgewandten Seite des Kragens des Spaltrohres oder Spalttopfes mindestens ein Sensorelement, insbesondere Temperatursensor, angeordnet ist. Ebenfalls vorteilhaft ist es, wenn mittels des bzw. der Temperatursensoren die Temperatur des Lagerschildes bzw. Kragens des Spalttopfes erfaßbar bzw. meßbar ist und durch die mittels der Permanentmagnete in den nicht stromführenden Strangwicklungen der Ständerwicklung induzierten Spannung die Rotorlage, Rotordrehzahl, sowie Rotordrehrichtung erfaßbar bzw. meßbar ist, wobei die Meßsignale einer Auswertelektronik zugeführt werden, die den Volumenstrom des Fördermediums bestimmt. Auch kann vorteilhaft die gemessene Stromstärke in den einzelnen Ständerwicklungen zur Bestimmung des Volumenstroms mittels der Auswertelektronik herangezogen werden. Durch die Auswertelektronik läßt sich zudem vorteilhaft und kostengünstig eine Wärmemengenregelung der Pumpe vornehmen. Zur Verbesserung der angestrebten (kalorimetrischen) Volumenstrommessung wird die Lagerschildfläche des Spalttopfes speziell ausgeformt, um die Sensoren in einen guten Wärmekontakt mit dem Fördermedium bzw. der Lagerschildfläche des Spalttopfes zu bringen.

Durch den besonderen Aufbau der vorbeschriebenen Spaltrohrpumpe läßt sich eine derartige Spaltrohrpumpe kostengünstiger, schneller und leichter montieren. Vorteilhaft ist es dabei, wenn die Teile der Spaltrohrpumpe in axialer, insbesondere aus eineraxialen Richtung aneinandergefügt werden. Dazu wird in einem ersten Prozeßschritt das Laufrad in eine Haltevorrichtung eingespannt und in einem zweiten Prozeßschritt die Welle mit zugehörigem Rotor in das Laufrad eingeschoben und in einem dritten Prozeßschritt der Spalttopf mit vormontierter Wicklung aufgeschoben und in einem vierten Prozeßschritt der Statorrückschluß bzw. das Statorblechpaket auf den Spalttopf aufgeschoben und in einem fünften Prozeßschritt das Elektronikmodul und das Gehäuse über den Spalttopf mit Ständerwicklung geschoben, wodurch die Antriebsseite der Spaltrohrpumpe verschlossen ist. Bei einem derartigen Montageverfahren entfallen die bei bisher bekannten Montageverfahren notwendigen radialen Fügeprozesse, wodurch die Bestückungsmaschinen in ihrer Konstruktion wesentlich vereinfacht und dadurch billiger herstellbar sind.

Ein weiteres vorteilhaftes Verfahren zur Montage der Ständerwicklung sieht vor, daß die Folienwicklung um die zylindrische Außenmantelfläche des Spalttopfes bzw. Spaltrohres gelegt oder auf diesen aufgeschoben wird und mittels einer Schraub-, Kleb-, Schweiß- oder Nietverbindung an diesem befestigt wird. Auch können die Ständerwicklungen einzeln auf die zylindrische Außenmantelfläche des Spalttopfes bzw. Spaltrohres aufgewikkelt bzw. aufgelegt und mittels einer Klemm- oder Klebvorrichtung in Position gehalten werden. Es ist ebenfalls vorteilhaft, wenn die Ständerwicklungen einzeln oder im Verbund auf die zylinderische Außenmantelfläche des Spalttopfes aufgewickelt, aufgelegt oder in diese eingeätzt werden und anschließend mit einer Substanz umgossen werden, die nach dem Gießprozeß hart wird und die Wicklungen auf dem Spalttopf in Position hält. Mittels dieser Verfahren läßt sich die Ständerwicklung schnell, einfach und kostengünstig am Spalttopf bzw. an dessen zylindrischer Außenmantelfläche oder scheibenförmigen Kragen montieren.

Nachfolgend wird der erfindungsgemäße Gegenstand anhand der Zeichnungen näher erläutert.

Es zeigen:
- Fig. 1:: Eine Spaltrohrpumpe mit einem elektronisch kommutierten Radialflußmotor mit integrierter Elektronik; und
- Fig. 2:: Eine Spaltrohrpumpe mit einem elektronisch kommutierten Radialflußmotor mit im Gehäuse integrierter Elektronik.

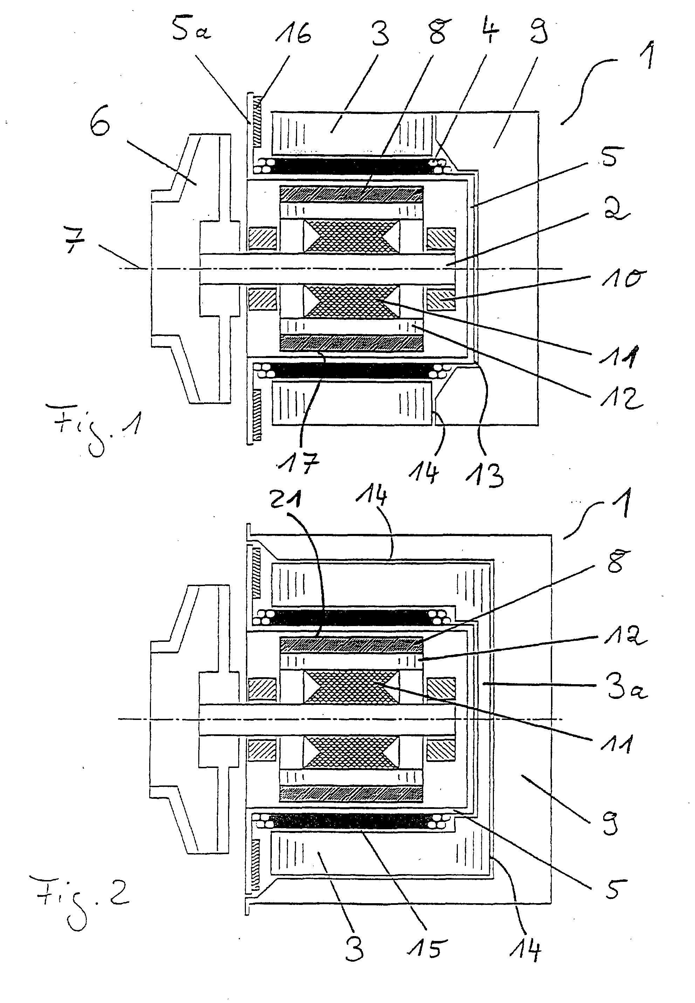

Fig. 1 zeigt eine Spaltrohrpumpe 1 mit einem elektronisch kommutierten Motor, dessen Rotor 2 in einem Spalttopf 5 einliegt, wobei an dem dem Spalttopfboden abgewandten Ende des Rotors 2 ein Laufrad 6 befestigt ist. Auf der zylindrischen Mantelfläche des Spalttopfes 5 liegt außen eine Folienständerwicklung 4 auf. Die Folienständerwicklung 4 ist radial nach außen durch ein Ständerblechpaket 3 gehalten. Die Ständerwicklung 4 hat nicht dargestellte Sensorwicklungen, die die Positionierung des Rotors im Spalttopf erfassen. Die Ständerwicklungen 4 sowie die Sensorwicklungen sind mit der Motorelektronik 9 in elektrischer Verbindung. Die Motorelektronik 9 übernimmt die elektronische Ansteuerung der Wicklungen in der Weise, daß die magnetische Ständerflußrichtung, hervorgerufen durch eine stromführende Wicklung mit der magnetischen Läuferflußrichtung, einen bestimmten Winkel insbesondere einen mittleren Winkel von 90 Grad einschließt. Die nicht dargestellten Sensorwicklungen, die in der Ständerwicklung 4 integriert oder auf diese aufgelegt sind, dienen als Stellungsgeber. Die Information des Rotorstellungsgebers wird dabei zum geordneten Weiterschalten der Wicklungsströme von einem Strang auf den folgenden von der Motorelektronik 9 verwendet. Zusätzlich können die Informationen der Sensoren 16, die an der dem Pumpenlaufrad 6 abgewandten Seite des Spaltrohrkragens 5a angeordnet sind zur Weiterschaltung bzw. Ansteuerung der Ständerwicklungen 4 verwendet werden. Die Motorelektronik 9 ist als Modul ausgebildet, insbesondere als topfförmiges Modul, wobei die Topfbodeninnenwand an der Spalttopfbodenaußenseite anliegt, wodurch sich ein guter Wärmeübergang auf das Fördermedium erreichen läßt. Zusätzlich kann zwischen die Anlageflächen 13 der Motorelektronik 9 und des Spalttopfbodens 5 eine Wärmeleitpaste eingebracht werden. Die Motorelektronik 9 hat zudem eine Anlagefläche 14 mit dem Ständerblechpaket 3.

Der Rotor 2 ist von zwei Lagern 10 gehalten, wobei zwischen den Lagern 10 auf dem Rotor 2 ein hülsenförmiges Trägerelement 11 ist, welches aus Gewichtsgründen vorzugsmäßig aus Kunststoff ist. Das Trägerelement 11 hält ein Blechpaket 12, welches die Permanentmagnete 8 trägt. Die Permanentmagnete 8 liegen dabei entweder in sich axial erstreckenden Nuten ein oder sind form- oder kraftschlussig am Blechpaket 12 befestigt.

Der in Fig. 2 dargestellte elektronisch kommutierte Radialflußmotor unterscheidet sich von dem in Fig. 1 dargestellten Motor dadurch, daß die Elektronik 9 in das Motorgehäuse integriert ist, wobei das Motorgehäuse 9 sowie das Ständerblechpaket 3 topfförmig ist. Das topfförmige Gehäuse 9 umfaßt dabei mit seinem zylindrischen Teil das Ständerblechpaket 3 und schließt. mit dem Spaltrohrkragen 5a bündig ab. Das Motorgehäuse mit integrierter Elektronik 9 liegt mit seiner Topfbodeninnenseite sowie mit seiner zylindrischen Innenseite 14 an der Topfaußenseite des Ständerblechpakets 3 an. Der Topfboden 3a des Ständerblechpakets 3 liegt zwischen dem Spalttopfboden und dem Motorgehäuse 9 ein und bildet den Wärmeübergangswiderstand zwischen Motorelektronik 9 und Spalttopf 5.

## Patentansprüche

1. Spaltrohrpumpe (1) mit einem die Pumpe antreibenden Motor, bei dem zwischen Rotor (2) und Ständer ein Spaltrohr, insbesondere ein Spalttopf, angeordnet ist, wobei das Spaltrohr (5) eine Ständerwicklung trägt,
**dadurch gekennzeichnet,**
- **daß** der Motor ein elektonisch kommutierter Motor ist, wobei an der dem Spaltrohr zugewandten Seite des Rotors gleichmäßig um die Rotorachse angeordnete Permanentmagnete befestigt sind, die zur Drehmomentübertragung vom Stator auf das Laufrad dienen,
- **daß** die Ständerwicklung eine Luftspaltwicklung ist,
- **daß** die auf dem Spaltrohr (5) vormontierte Ständerwicklung und des Spaltrohr (5) eine bauliche Einheit bilden, wobei die vormontierte Ständerwicklung entweder eine Backlackwicklung ist, die mit der zylindrischen Außenseite des Spaltrohres (5) verbacken ist, oder wobei die vormontierte Ständerwicklung eine ein- oder mehrlagige Folienwicklung ist, die an der zylindrischen Außenseite des Spaltrohres (5) anliegt und die von einer aushärtenden Substanz umgossen und von dieser in Position gehalten ist, und
- **daß** auf der dem Spaltrohr (5) abgewandten Seite der Ständerwicklung ein aufschiebbares, insbesondere zylinder- oder topfförmiges, Ständerblechpaket angeordnet ist.

2. Spaltrohrpumpe nach Anspruch 1,
**dadurch gekennzeichnet , daß** das Spaltrohr aus Kunststoff ist.

3. Spaltrohrpumpe nach Anspruch 1 oder 2,
**dadurch gekennzeichnet , daß** mindestens eine Folie der Folienwicklung einen induktiven, kapazitiven oder ohmschen Sensor aufweist.

4. Spaitrohrpumpe nach einem der vorherigen Ansprüche,
**dadurch gekennzeichnet, daß** die Ständerwicklungen (4) und/oder Sensorwicklungen in die vom Rotor (2) oder vom Laufrad (6) abgewandte Seite des Spalttopfes (5) eingelegt, eingegossen, eingeschlossen oder eingebacken sind.

5. Spaltrohrpumpe nach einem der vorherigen Ansprüche,
**dadurch gekennzeichnet , daß** die Permanentmagnete (8) in radialer Richtung zumindest teilweise mit ihrer Außenfläche an der Mantelinnenseite eines hülsenförmigen Teils (21) anliegen, wobei das hülsenförmige Teil (21) insbesondere aus einem korrosionsfesten Werkstoff ist.

6. Spaltrohrpumpe nach einem der vorherigen Ansprüche,
**dadurch gekennzeichnet , daß** das zylinder-oder topfförmiges Ständerblechpaket (3) mit seiner Innenfläche und/oder Bodeninnenseite (3a) mit dem Spaltrohr bzw. Spalttopf (5) in Kontakt ist.

7. Spaltrohrpumpe nach einem der vorherigen Ansprüche,
**dadurch gekennzeichnet , daß** das Ständerblechpaket (3) aus einem beschichteten weichmagnetischen oder Sintermaterial ist oder das Ständerblechpaket (3) ein Ringbandkern ist, wobei eine metallische Ronde als magnetischer Rückschluss dient.

8. Spaltrohrpumpe nach einem der vorherigen Ansprüche,
**dadurch gekennzeichnet , daß** die Motorelektronik (9) neben dem Stator, insbesondere an der dem Pumpenlaufrad (6) abgewandten Seite des Stators, angeordnet ist bzw. an diesen anschließt, wobei das Statorblechpaket (3) als Kühlkörper und zur elektronischen Abschirmung für die Elektronik (9) dient.

9. Spaltrohrpumpe nach Anspruch 8,
**dadurch gekennzeichnet , daß** die Motorelektronik (9) an der dem Laufrad (6) abgewandten Spalttopfbodenseite anliegt.

10. Spaltrohrpumpe nach Anspruch 8 oder 9,
**dadurch gekennzeichnet , daß** die Motorelektronik (9) als insbesondere aufsteckbares Modul ausgebildet ist oder daß die Motorelektronik (9) einen Teil des Motorgehäuses bildet und/oder über Steckkontakte verfügt, die mit am Spalttopf (5) und/oder Statorblechpaket (3) und/oder Ständerwicklung (4) angeordneten Kontakten die elektrische Verbindung realisieren.

11. Spaltrohrpumpe nach einem der vorherigen Ansprüche,
**dadurch gekennzeichnet , daß** an der dem Pumpenlaufrad (6) abgewandten Seite des Kragens (5a) des Spaltrohrs oder Spalttopfes (5) mindestens ein Sensorelement (16), insbesondere ein Temperatursensor, angeordnet ist.

12. Spaltrohrpumpe nach Anspruch 11,
**dadurch gekennzeichnet , daß** mittels des Temperatursensors (16) die Temperatur des Lagerschildes oder des Kragens (5a) erfassbar ist und daß durch die wegen der Permanentmagnete (8) in den nicht stromführenden Strangwicklungen der Ständerwicklung (4) induzierten Spannungen die Rotorlage,
Rotordrehzahl sowie Drehrichtung erfassbar ist, wobei die Messsignale einer Auswertelektronik zugeführt werden, die den Volumenstrom des Fördermediums bestimmt.

13. Spaltrohrpumpe nach Anspruch 12,
**dadurch gekennzechnet**, daß die Auswertelektronik eine Wärmemengenregelung der Pumpe (1) vornimmt.

14. Spaltrohrpumpe nach Anspruch 12,
**dadurch gekennzeichnet , daß** die Auswertelektronik zur Bestimmung des Volumenstroms die momentanen Stromstärken in den einzelnen Ständerwicklungen (4) berücksichtigt.

15. Verfahren zur Montage einer Spaltrohrpumpe (1) nach einem der vorherigen Ansprüche, **dadurch gekennzeichnet, daß** die Teile der Spaltrohrpumpe (1) in axialer Richtung aneinandergefügt werden, wobei in einem ersten Prozessschritt das Laufrad (6) in eine Haltevorrichtung eingespannt wird, in einem zweiten Prozessschritt die Welle (2) mit zugehörigem Rotor in das Laufrad eingeschoben wird, in einem dritten Prozessschritt der Spalttopf (5) mit vormontierter Wicklung (4) aufgeschoben wird, in einem vierten Prozessschritt das Statorblechpaket (3) auf den Spalttopf (5) aufgeschoben wird und einem fünften Prozessschritt das Elektronikmodul (9) und das Gehäuse (9) über den Spalttopf (5) geschoben wird.

## Claims

1. Canned pump (1) with a motor which drives the pump and in which a can, in particular a split cage, is arranged between the rotor (2) and the stator, the can (5) carrying a stator winding, **characterized**
- **in that** the motor is an electronically commutated motor, there being fastened to that side of the rotor which faces the can permanent magnets which are arranged uniformly about the rotor axis and serve for the transmission of torque from the stator to the impeller,
- **in that** the stator winding is an air-gap winding,
- **in that** the stator winding premounted on the can (5) and the can (5) form a structural unit, either the premounted stator winding being a baked-lacquer winding which is baked together with the cylindrical outer face of the can (5) or the premounted stator winding being a single-ply or multi-ply film winding which bears against the cylindrical outer face of the can (5) and around which a curing substance is moulded and which is held in position by the latter, and
- **in that** a push-on, in particular cylindrical or pot-shaped laminated stator core is arranged on that side of the stator winding which faces away from the can (5).

2. Canned pump according to Claim 1, **characterized in that** the can is made from plastic.

3. Canned pump according to Claim 1 or 2, **characterized in that** at least one film of the film winding has an inductive, capacitive or ohmic sensor.

4. Canned pump according to one of the preceding claims, **characterized in that** the stator windings (4) and/or sensor windings are introduced, moulded, included or baked into that side of the split cage (5) which faces away from the rotor (2) or from the impeller (6).

5. Canned pump according to one of the preceding claims, **characterized in that** the permanent magnets (8) at least partially bear in the radial direction with their outer face against the cylindrical inner face of a sleeve-shaped part (21), the sleeve-shaped part (21) being made, in particular, from a corrosion-resistant material.

6. Canned pump according to one of the preceding claims, **characterized in that** the cylindrical or pot-shaped laminated stator core (3) is in contact by its inner face and/or bottom inner face (3a) with the can or split cage (5).

7. Canned pump according to one of the preceding claims, **characterized in that** the laminated stator core (3) is made from a coated soft-magnetic or sintered material or the laminated stator core (3) is a toroidal strip-wound core, a metallic round piece serving as a magnetic return.

8. Canned pump according to one of the preceding claims, **characterized in that** the motor electronics (9) are arranged next to the stator, in particular on that side of the stator which faces away from the pump impeller (6), or adjoins the said stator, the laminated stator core (3) serving as a cooling body and for electronic shielding for the electronics (9).

9. Canned pump according to Claim 8, **characterized in that** the motor electronics (9) bear against the split-cage bottom side facing away from the impeller (6).

10. Canned pump according to Claim 8 or 9, **characterized in that** the motor electronics (9) are designed, in particular, as a plug-on module, or **in that** the motor electronics (9) form part of the motor housing and/or have plug contacts which make the electrical connection with contacts arranged on the split cage (5) and/or laminated stator core (3) and/or stator winding (4).

11. Canned pump according to one of the preceding claims, **characterized in that** at least one sensor element (16), in particular a temperature sensor, is arranged on that side of the collar (5a) of the can or split cage (5) which faces away from the pump impeller (6).

12. Canned pump according to Claim 11, **characterized in that** the temperature of the bearing plate or of the collar (5a) can be detected by means of the temperature sensor (16), and **in that** the rotor position, rotor rotational speed and direction of rotation can be detected by means of the voltages induced in the non-live phase windings of the stator winding (4) on account of the permanent magnets (8), the measurement signals being supplied to evaluation electronics which determine the volume flow of the feed medium.

13. Canned pump according to Claim 12, **characterized in that** the evaluation electronics carry out a heat-quantity regulation of the pump (1).

14. Canned pump according to Claim 12, **characterized in that** the evaluation electronics for determining the volume flow take into account the instantaneous current intensities in the individual stator windings (4).

15. Method for mounting a canned pump (1) according to one of the preceding claims, **characterized in that** the parts of the canned pump (1) are assembled together in the axial direction, in a first process step the impeller (6) being clamped into a holding device, in a second process step the shaft (2) together with the associated rotor being pushed into the impeller, in a third process step the split cage (5) together with the premounted winding (4) being pushed on, in a fourth process step the laminated stator core (3) being pushed onto the split cage (5), and, in a fifth process step, the electronic module (9) and the housing (9) being pushed over the split cage (5).

## Revendications

1. Pompe (1) à moteur à gaine avec un moteur actionnant la pompe, dans lequel une gaine, en particulier un manchon, est disposé entre le rotor (2) et le stator, la gaine (5) portant la bobine statorique,
**caractérisée en ce**
- **que** le moteur d'entraînement est un moteur à commutation électrique, des aimants permanents disposés uniformément autour de l'axe du rotor étant fixés à la face du rotor tournée vers la gaine et servent à la transmission du couple de rotation du stator à la roue mobile de pompe,
- **que** la bobine statorique est une bobine à entrefer,
- **que** la bobine statorique prémontée sur la gaine (5) et la gaine (5) forment une unité constructive, soit la bobine statorique prémontée étant une bobine en câble laqué qui est cuite avec la face extérieure cylindrique de la gaine (5), soit la bobine statorique prémontée étant une bobine mono ou multicouches qui est en appui sur la face extérieure cylindrique de la gaine (5) et est entourée d'une substance durcissable et est maintenue en position par celle-ci et
- **qu'**un empilage de tôles statoriques coulissant, en particulier cylindrique ou en forme de pot, est disposé sur la face de la bobine statorique écartée de la gaine (5).

2. Pompe à moteur à gaine selon la revendication 1,
**caractérisée en ce que** la gaine est en matière synthétique.

3. Pompe à moteur à gaine selon la revendication 1 ou 2,
**caractérisée en ce qu'**au moins une feuille de la bobine en feuilles présente un capteur inductif, capacitif ou ohmique.

4. Pompe à moteur à gaine selon l'une des revendications précédentes,
**caractérisée en ce que** les bobines statoriques (4) et/ou bobines à capteurs sont logées, coulées, enfermées ou cuites dans la face du manchon (5) écartée du rotor (2) ou de la roue mobile (6).

5. Pompe à moteur à gaine selon l'une des revendications précédentes,
**caractérisée en ce que** les aimants permanents (8) sont en appui, en direction radiale, au moins partiellement par leur surface extérieure à la face intérieure d'enveloppe d'une pièce (21) en forme de douille, la pièce (21) en forme de douille étant en particulier en un matériau résistant à la corrosion.

6. Pompe à moteur à gaine selon l'une des revendications précédentes,
**caractérisée en ce que** l'empilage de tôles statoriques (3) cylindrique ou en forme de pot est en contact avec la gaine ou respectivement le manchon (5) par sa surface intérieure et/ou sa face intérieure (3a) de fond.

7. Pompe à moteur à gaine selon l'une des revendications précédentes,
**caractérisée en ce que** l'empilage de tôles statoriques (3) est en un matériau magnétique doux revêtu ou fritté ou bien l'empilage de tôles statoriques (3) est un tore enroulé, un rond métallique servant de fermeture de flux magnétique.

8. Pompe à moteur à gaine selon l'une des revendications précédentes,
**caractérisée en ce que** l'électronique (9) du moteur est disposée à côté du stator, en particulier sur la face du stator écartée de la roue mobile (6) de pompe, ou respectivement se raccorde à celui-ci, l'empilage de tôles statoriques (3) servant de dissipateur de chaleur et d'écran électronique pour l'électronique (9).

9. Pompe à moteur à gaine selon la revendication 8,
**caractérisée en ce que** l'électronique (9) du moteur est en appui sur la face du fond du manchon écartée de la roue mobile (6).

10. Pompe à moteur à gaine selon la revendication 8 ou 9,
**caractérisée en ce que** l'électronique (9) du moteur est réalisée sous forme de module en particulier enfichable ou que l'électronique (9) du moteur forme une partie du carter du moteur et/ou est munie de contacts à fiches qui réalisent la connexion électrique avec des contacts disposés sur le manchon (5) et/ou l'empilage de tôles statoriques (3) et/ou la bobine statorique (4).

11. Pompe à moteur à gaine selon l'une des revendications précédentes,
**caractérisée en ce qu'**au moins un élément capteur (16), en particulier un capteur de température, est disposé sur la face de la collerette (5a) de la gaine ou du manchon (5) écartée de la roue mobile (6) de pompe.

12. Pompe à moteur à gaine selon la revendication 11,
**caractérisée en ce que** la température du flasque ou de la collerette (5a) peut être détectée au moyen du capteur de température (16) et que la position du rotor, la vitesse de rotation du rotor ainsi que le sens de rotation peuvent être détectés par les tensions induites au moyen des aimants permanents (8) dans les enroulements de branche non conducteurs de la bobine statorique (4), les signaux de mesure étant envoyés à une électronique d'exploitation qui détermine le flux volumique du liquide refoulé.

13. Pompe à moteur à gaine selon la revendication 12,
**caractérisée en ce que** l'électronique d'exploitation effectue une régulation de quantité de chaleur de la pompe (1).

14. Pompe à moteur à gaine selon la revendication 12,
**caractérisée en ce que** l'électronique d'exploitation, pour déterminer le flux volumique, prend en compte les intensités de courant instantanées dans les bobines statoriques (4) individuelles.

15. Procédé de montage d'une pompe (1) à moteur à gaine selon l'une des revendications précédentes,
**caractérisé en ce que** les pièces de la pompe (1) à moteur à gaine sont assemblées les unes aux autres en direction axiale, la roue mobile (6) étant serrée dans un dispositif de support dans une première étape du processus, l'arbre (2) avec le rotor adjoint étant enfilés dans la roue mobile dans une deuxième étape du processus, le manchon (5) avec une bobine (4) prémontée étant glissé dessus dans une troisième étape du processus, l'empilage de tôles statoriques (3) étant glissé sur le manchon (5) dans une quatrième étape du processus et le module électronique (9) et le carter (9) étant glissés sur le manchon (5) dans une cinquième étape du processus.
